Europäisches Patentamt

European Patent Office

Office européen des brevets

(19)

(11) **EP 1 320 968 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(21) Anmeldenummer: **01971694.3**

(22) Anmeldetag: **30.08.2001**

(51) Int Cl.$^7$: **H04L 27/22**

(86) Internationale Anmeldenummer:
**PCT/DE2001/003389**

(87) Internationale Veröffentlichungsnummer:
**WO 2002/021785 (14.03.2002 Gazette 2002/11)**

(54) **AUTOMATISCHE FREQUENZKORREKTUR FÜR MOBILFUNKEMPFÄNGER**

AUTOMATIC FREQUENCY CORRECTION FOR MOBILE RADIO RECEIVERS

CORRECTION AUTOMATIQUE DE FREQUENCE POUR RECEPTEUR DE TELEPHONIE MOBILE

(84) Benannte Vertragsstaaten:
**DE FR GB**

(30) Priorität: **05.09.2000 DE 10043743**

(43) Veröffentlichungstag der Anmeldung:
**25.06.2003 Patentblatt 2003/26**

(73) Patentinhaber: **Infineon Technologies AG
81669 München (DE)**

(72) Erfinder: **YANG, Bin
81735 München (DE)**

(74) Vertreter: **Lange, Thomas, Dr. et al
Patentanwälte
Lambsdorff & Lange,
Dingolfinger Strasse 6
81673 München (DE)**

(56) Entgegenhaltungen:
**EP-A- 0 648 037**      **WO-A-00/54431**
**WO-A-98/34357**

• **LUISE, REGGIANNINI: "Carrier frequency recovery in all-digital modems for burst-mode transmission" IEEE TRANSACTIONS ON COMMUNICATIONS, Bd. 43, Nr. 2/3/4, Februar 1995 (1995-02), Seiten 1169-1178, XP000502606 NEW YORK, US ISSN: 0090-6778**

**Beschreibung**

Die Erfindung betrifft eine Empfangseinheit für die Mobilfunkübertragung, sowie ein Verfahren zur Korrektur des Frequenzfehlers bei der Mobilfunkübertragung von Datensymbolen.

Bei der Übertragung von Datensymbolen über einen Mobilfunkkanal gibt es mehrere Fehlerquellen, die zusammen die auf eine bestimmte Sendeleistung bezogene Bitfehlerrate bestimmen. Die bislang wichtigste Fehlerquelle ist das Rauschen.

Daneben trägt auch der sogenannte Frequenzfehler signifikant zur Bitfehlerrate bei. Darunter versteht man den durch unterschiedliche Oszillatorfrequenzen auf Sende- und Empfangsseite verursachten Fehler. Die Nichtübereinstimmung der sende- und empfangsseitigen Oszillatorfrequenz kann ihre Ursache in den Herstellungstoleranzen der verwendeten Oszillatoren und Schwingquarze haben. Auf der Seite der Basisstation kann der notwendige Aufwand zur Bereitstellung eines hochgenauen Frequenznormals betrieben werden. Auf Handyseite dagegen weisen die verwendeten Oszillatoren wegen der Kostenoptimierung erhebliche Frequenzschwankungen auf.

Zum Frequenzfehler trägt darüber hinaus der Dopplereffekt bei. Eine Relativbewegung zwischen Sender und Empfänger führt dabei zu einer Frequenzverschiebung der gesendeten Signale. Nehmen wir an, ein Mobilfunkteilnehmer telefoniert von seinem Auto aus, das sich mit einer Geschwindigkeit von 200 km/h bewegt. Bei einer Sendefrequenz von 900 MHz ergibt sich eine maximale Dopplerverschiebung von

$$\frac{200 \text{ km} / \text{h}}{3 \cdot 10^5 \text{ km} / \text{s}} \cdot 900 \text{ MHz} \approx 167 \text{ Hz} .$$

Im Mobilfunkstandard GSM wird ein relativ niedriger Signal-Rausch-Abstand von weniger als 10 dB verwendet. Insofern ist das Rauschen hier die dominante Fehlerquelle. Die im GSM-Standard verwendete GMSK-Modulation verwendet einen Signalraum mit den Signalpunkten +1 und -1. Da diese beiden Signalpunkte eine Phasendifferenz von 180° aufweisen, führen geringe Phasen- bzw. Frequenzfehler nicht zu einem Anstieg der Bitfehlerrate. GSM ist daher wegen der verwendeten GMSK-Modulation relativ robust gegenüber Frequenzfehlern.

Bei dem Dienst GPRS (General Packet Radio Service) ist die Situation anders, da hier mit einem höheren Signal-Rausch-Abstand von mehr als 15 dB gearbeitet wird. Dadurch werden Datenübertragungsraten bis zu 21,4 kBit/s ermöglicht. Das Rauschen ist hier als Fehlerquelle weniger bedeutsam, während der Frequenzfehler, insbesondere die Dopplerverschiebung, zur dominanten Fehlerquelle wird.

Als Übergangsstandard zwischen GSM/GPRS und UMTS wurde der Standard EDGE (Enhanced Data Rates for GSM Evolution) sowie der zugehörige Paketdienst EGPRS (Enhanced GPRS) definiert. Bei EDGE handelt es sich noch um ein TDMA-Verfahren (Time Division Multiple Access), es wird aber bereits von der GMSK-Modulation auf die 8-PSK-Modulation übergegangen. Bei der 8-PSK-Modulation wird ein Signalraum mit 8 Signalpunkten verwendet, wobei die Phasendifferenz zwischen den einzelnen Signalpunkten 45° beträgt. Aus diesem Grund machen sich bereits kleine Phasen- bzw. Frequenzfehler störend bemerkbar und verursachen eine signifikante Erhöhung der Bitfehlerrate.

Es müssen daher Maßnahmen zur Korrektur des Frequenzfehlers ergriffen werden.

Zu diesem Zweck wurde vorgeschlagen, die vom Kanalschätzer zur Modellierung des Übertragungskanals ermittelten Kanalkoeffizienten mittels eines sogenannten Channel-Checkers ständig an die aktuelle Übertragungssituation anzupassen. Es hat sich aber herausgestellt, daß durch regelmäßige Neubestimmung der Kanalkoeffizienten keine wirksame Korrektur des Frequenzfehlers erzielt werden kann.

In der Schrift WO 98/34357 A1 ist eine Empfangseinheit für die Mobilfunkübertragung mit einer Dopplerkorrekturstufe beschrieben. Dazu weist die Empfangseinheit einen Kanalschätzer auf, welchem die Empfangsdaten zugeführt werden und welcher daraus die Kanalkoeffizienten errechnet. Mittel zur Frequenzschätzung ermitteln die Frequenzverschiebung für jedes Datenbit, und Mittel zur Frequenzkorrektur korrigieren anhand der ermittelten Frequenzverschiebungen die Phasen der empfangenen Datensymbole. Ein Kanalentzerrer entzerrt schließlich die phasenkorrigierten Datensymbole mittels der Kanalkoeffizienten.

Gegenstand der Schrift EP 0 648 037 A1 ist die Demodulation von Empfangssignalen. Die Demodulation wird mittels einer Referenzphase durchgeführt, welche aus einer Regressionsanalyse der Phasen der Empfangssignale hervorgeht.

In der Schrift "Carrier Frequency Recovery in All-Digital Modems for Burst-Mode Transmissions" von M. Luise und R. Reggiannini, erschienen in IEEE Transactions on Communications, 1995, Band 43, Seiten 1169-1178, ist ein Algorithmus zur Berechnung der Frequenzverschiebung einer Trägerfrequenz beschrieben. Die Frequenzverschiebung wird aus einer Folge von Phasendifferenzen zwischen empfangenen Datensymbolen und den aus einer Trainingsfolge abgeleiteten frequenzfehlerfreien Datensymbolen berechnet.

Aufgabe der Erfindung ist es, eine Empfangseinheit für die Mobilfunkübertragung sowie ein Verfahren zur Korrektur des Frequenzfehlers zur Verfügung zu stellen, welche bei gleichbleibender Sendeleistung eine Verringerung der Bitfehlerrate bei der Mobilfunkübertragung ermöglichen.

Diese Aufgabe der Erfindung wird durch eine Empfangseinheit für die Mobilfunkübertragung gemäß Anspruch 1 sowie durch ein Verfahren zur Korrektur des Frequenzfehlers bei der Mobilfunkübertragung gemäß Anspruch 11 gelöst.

Die erfindungsgemäße Empfangseinheit weist einen Kanalschätzer auf, der die Kanalkoeffizienten $h_0, \ldots h_L$ zur Modellierung des Übertragungskanals ermittelt. L bezeichnet dabei das Kanalgedächtnis. Des weiteren weist die Empfangseinheit Mittel zur Frequenzschätzung auf, welche die Frequenzverschiebung $\Delta\omega$ der empfangenen Datensymbole x(k) bestimmen. In Abhängigkeit von der analytisch ermittelten Frequenzverschiebung $\Delta\omega$ korrigieren die Mittel zur Frequenzkorrektur jeweils die Phase der empfangenen Datensymbole. Weiterhin umfaßt die Empfangseinheit einen Kanalentzerrer, der die phasenkorrigierten Datensymbole entsprechend den vom Kanalschätzer ermittelten Kanalkoeffizienten entzerrt.

Erfindungsgemäß werden die Kanalkoeffizienten anhand der ursprünglichen empfangenen Datensymbole ermittelt, während der Kanalentzerrung bereits explizit phasenkorrigierte Datensymbole zugrunde gelegt werden. Um die Phasenkorrektur der Datensymbole durchführen zu können, wird die Frequenzverschiebung $\Delta\omega$ analytisch ermittelt. Entsprechend der Höhe der Frequenzverschiebung $\Delta\omega$ wird eine Korrektur der Phasen der empfangenen Datensymbole durchgeführt.

Die Frequenzkorrektur wird bei der erfindungsgemäßen Lösung zwischen Kanalschätzung und Kanalentzerrung durchgeführt. Nur wenn der Kanalschätzer die ursprünglichen Datensymbole verarbeitet und der Kanalentzerrer die phasenkorrigierten Datensymbole entzerrt, kann eine wirkungsvolle Kompensation des Frequenzfehlers erzielt werden. Mit der erfindungsgemäßen Lösung ist eine relevante Absenkung der Bitfehlerrate bei gleichbleibender Sendeleistung möglich. Entsprechend kann eine vorgegebene Bitfehlerrate mit deutlich geringerer Sendeleistung realisiert werden. Die erfindungsgemäße automatische Frequenzkorrektur erlaubt bei vorgegebener Bitfehlerrate eine Absenkung der Sendeleistung um mehrere dB.

Durch die Mittel zur Frequenzschätzung wird erfindungsgemäß eine Folge p(k) von Phasendifferenzen zwischen den empfangenen Datensymbolen x(k) und den aus einer Trainingsfolge abgeleiteten frequenzfehlerfreien Datensymbolen y(k) bestimmt. Aus dieser Folge p(k) wird die Frequenzverschiebung $\Delta\omega$ ermittelt.

Um den jeweiligen Phasenfehler der empfangenen Datensymbole bestimmen zu können, wird eine frequenzfehlerfreie Datensymbolfolge y(k) benötigt. Zur Bestimmung dieser frequenzfehlerfreien Datensymbole y(k) wird die zusammen mit jedem Burst übertragene Trainingsfolge verwendet. Hinsichtlich der Trainingsfolge sind auf Empfängerseite sowohl die zugrundeliegenden gesendeten Trainingssymbole als auch die tatsächlich empfangenen Trainingssymbole bekannt, und daraus kann auf Empfängerseite eine gewisse Anzahl von frequenzfehlerfreien Datensymbolen y(k) bestimmt werden.

Sämtliche Standards wie GSM, GPRS, EDGE, EGPRS sehen vor, daß mit jedem Datenburst eine Trainingsfolge übermittelt wird. Die für die erfindungsgemäße Lösung benötigte Trainingsfolge ist also bereits in den verschiedenen Standards vorhanden, so daß die erfindungsgemäße Lösung keinen Zusatzaufwand erfordert. Die bereits vorhandene Trainingsfolge wird lediglich auf neue Art und Weise verwendet, um eine Folge von frequenzfehlerfreien Datensymbolen y(k) zu bestimmen.

Die Mittel zur Frequenzschätzung führen ferner eine lineare Regressionsanalyse der gegen die Zeit aufgetragenen Folge p(k) von Phasendifferenzen durch und ermitteln aus der Steigung die Frequenzverschiebung $\Delta\omega$. Ein linearer Anstieg/Abfall von p(k) mit zunehmendem k (k ist ein Maß für die Zeit) entspricht einem konstanten Frequenz-Offset $\Delta\omega$. Je größer $\Delta\omega$ ist, desto stärker ändert sich p(k) im zeitlichen Verlauf. Die Steigung von p(k) ist daher ein Maß für die Frequenzverschiebung $\Delta\omega$. Diese Steigung kann durch eine lineare Regressionsanalyse (Methode der Minimierung der Fehlerquadrate) ermittelt werden.

Bei Annahme einer linearen Abhängigkeit zwischen p(k) und $\Delta\omega$ wird sowohl der Beitrag einer permanenten Frequenzverstimmung zwischen Sender und Empfänger als auch der Beitrag der Dopplerverschiebung erfaßt. Terme höherer Ordnung tragen in wesentlich geringerem Ausmaß zum jeweiligen Phasenfehler bei und können daher vernachlässigt werden. Die Durchführung der linearen Regressionsanalyse kann mit geringem Rechenaufwand durchgeführt werden.

Dabei ist es von Vorteil, wenn vor Durchführung der linearen Regressionsanalyse eine statistische Glättung der Folge p(k) von Phasendifferenzen vorgenommen wird. Die erhaltenen Werte von p(k) erfassen die durch den Frequenzfehler hervorgerufene Phasenabweichung im wesentlichen korrekt. Die Erfahrung zeigt jedoch, daß einige Werte der Folge p(k) weit abseits des von den übrigen Werten gezeigten Verlaufs liegen. Diese Ausreißer verschlechtern das Ergebnis der Berechnung von $\Delta\omega$ wesentlich. Daher ist es von Vorteil, die Folge p(k) statistisch zu glätten und die Ausreißerwerte bei der Auswertung unberücksichtigt zu lassen.

Erfindungsgemäß wird für den Fall, daß ein Folgenwert p(k) der Folge von Phasendifferenzen vom Mittelwert $p_{mean}$ der Folge um mehr als einen vorgegebenen Schwellenwert abweicht, eine Glättung der Folge p(k) durchgeführt, indem der entsprechende Folgenwert p(k) durch eine Linearkombination des vorhergehenden Folgenwerts p(k-1) und des nachfolgenden Folgenwerts p(k+1) ersetzt wird.

Mit Hilfe des Mittelwerts $p_{mean}$ und eines vorgegebenen Schwellenwerts lassen sich die stark abweichenden Werte von p(k) leicht identifizieren. Jeder stark abweichende Folgenwert p(k) wird erfindungsgemäß durch eine Linearkombination von p(k-1) und p(k+1) ersetzt.

Gemäß einer vorteilhaften Ausführungsform der Erfindung erzeugen die Mittel zur Frequenzschätzung die frequenzfehlerfreien Datensymbole y(k) durch Remodulation der unverzerrten Trainingssymbole $s(K_1)$, ... $s(K_2)$ mit den Kanalkoeffizienten $h_0$, ... $h_L$. Dabei bezeichnet $s(K_1)$ das erste Trainingssymbol und $s(K_2)$ das letzte Trainingssymbol der unverzerrten Trainingsfolge.

Auf Empfängerseite sind sowohl die zugrunde liegenden gesendeten Trainingssymbole $s(K_1)$, ... $s(K_2)$ als auch die empfangenen Trainingssymbole $x(K_1)$, ... $x(K_2)$ der Trainingsfolge bekannt. Außerdem stehen auf Empfängerseite die durch Kanalschätzung ermittelten Kanalkoeffizienten $h_0$, ... $h_L$ zur Verfügung, die den Übertragungskanal mathematisch modellieren. Mit diesen Informationen kann berechnet werden, wie der Übertragungskanal die bekannten Trainingssymbole $s(K_1)$, ... $s(K_2)$ übertragen würde, wenn es keinen Frequenzfehler gäbe. Durch diese als "Remodulation" bezeichnete Methode kann ausgehend von den Trainingssymbolen eine Anzahl von idealen, frequenzfehlerfreien Datensymbolen y(k) berechnet werden. Bei den Datensymbolen y(k) handelt es sich also nicht um tatsächlich empfangene Datensymbole, sondern um rechnerisch unter Zugrundelegung des Kanalmodells synthetisierte Datensymbole.

Es ist von Vorteil, die Remodulation der Trainingssymbole $s(K_1)$, ... $s(K_2)$ mit den Kanalkoeffizienten $h_0$, ... $h_L$ gemäß der Formel

$$y(k) = \sum_{i=0}^{L} h_i \cdot s(k - i)$$

mit $k = K_1 + L$, ... $K_2$ durchzuführen.

Wenn man diese Formel explizit ausschreibt, wird klar, in welcher Weise die unverzerrten Datensymbole $s(K_1)$, ... $s(K_2)$ der Trainingsfolge kombiniert werden, um die frequenzfehlerfreie Folge y(k) zu liefern:

$$y(K_1 + L) = h_0 \cdot s(K_1 + L) + ... + h_L \cdot s(K_1)$$
$$\vdots \qquad\qquad \vdots$$
$$y(K_2) \qquad = h_0 \cdot s(K_2) + ... + h_L \cdot s(K_2 - L)$$

Wegen des Kanalgedächtnisses L tragen zum Wert $y(K_1 + L)$ nicht nur der zugehörige Wert $s(K_1 + L)$ bei, sondern auch die zurückliegenden Werte $s(K_1 + L - 1)$, ... $s(K_1)$. Wegen des Kanalgedächtnisses L können aus den $(K_2 - K_1 + 1)$ Ausgangssymbolen $s(K_1)$, ... $s(K_2)$ lediglich $(K_2 - K_1 - L + 1)$ frequenzfehlerfreie Werte $y(K_1 + L)$, ... $y(K_2)$ erzeugt werden. Die Berechnung der Werte von y(k) kann empfangsseitig ohne großen Rechenaufwand in kurzer Zeit durchgeführt werden.

Es ist von Vorteil, die Folge p(k) von Phasendifferenzen durch Auswerten der Phase des Ausdrucks

$$\frac{x(k)}{y(k)}$$

oder des Ausdrucks

$$\frac{y(k)}{x(k)}$$

zu erzeugen. Wegen der Quotientenbildung entspricht die Phase des Ausdrucks

$$\frac{x(k)}{y(k)}$$

der Differenz der Phasen von x(k) und y(k) und somit der jeweiligen Phasenabweichung.

Alternativ dazu ist es von Vorteil, die Folge p(k) von Phasendifferenzen durch Auswerten der Phase des

Ausdrucks

$$x^*(k) \cdot y(k)$$

oder des Ausdrucks

$$x(k) \cdot y^*(k)$$

zu erzeugen, wobei $x^*(k)$, $y^*(k)$ die Komplexkonjugierten von $x(k)$, $y(k)$ bezeichnen. Die Phase von $x^*(k)$ und von $x(k)$ unterscheiden sich in ihrem Vorzeichen. Insofern erhält man als Phase des Ausdrucks

$$x^*(k) \cdot y(k)$$

die Differenz der Phasen von $y(k)$ und $x(k)$.

Die Auswertung des Ausdrucks $x^*(k) \cdot y(k)$ hat gegenüber der Auswertung von

$$\frac{y(k)}{x(k)}$$

den Vorteil, daß eine rechenzeitaufwendige Division vermieden werden kann. Für den Fall $x(k) = 0$ oder $y(k) = 0$ können keine Singularitäten auftreten.

Bei der Glättung der Folge $p(k)$ ist es insbesondere sinnvoll, den für fehlerhaft erkannten Folgenwert $p(k)$ durch das arithmetische Mittel

$$\frac{p(k-1) + p(k+1)}{2}$$

des vorhergehenden und des nachfolgenden Folgenwerts zu ersetzen. Dies hat den weiteren Vorteil, daß die Gesamtzahl der Folgenwerte $p(k)$ jeweils konstant bleibt, was die nachfolgende lineare Regressionsanalyse erleichtert.

Es ist von Vorteil, wenn die Mittel zur Frequenzkorrektur die Phase der empfangenen Datensymbole $x(k)$ durch Multiplikation von $x(k)$ mit

$$e^{-i\Delta\omega \cdot k}$$

korrigieren. Die Frequenzverschiebung $\Delta\omega$ verursacht einen linear mit k anwachsenden Phasenfehler, der mittels einer Phasenrampenfunktion korrigierbar ist. Dazu wird die Phase eines empfangenen Datensymbols $x(k)$ um $-\Delta\omega \cdot k$ korrigiert. Dazu wird jedes komplexwertige Datensymbol $x(k)$ mit dem komplexen Sinus-Signal

$$e^{-i\Delta\omega \cdot k} = \cos(\Delta\omega \cdot k) - i \cdot \sin(\Delta\omega \cdot k)$$

multipliziert. Dies kann mittels einer Sinus-Kosinus-Koeffiziententabelle auf einfache Art und Weise durchgeführt werden. Alternativ dazu kann auch der sogenannte CORDIC-Algorithmus verwendet werden, der in der deutschen Patentanmeldung 199 48 899.1 "Verfahren und Schaltungsordnung zur digitalen Frequenzkorrektur eines Signals" beschrieben ist.

Es ist von Vorteil, wenn die Mittel zur Frequenzkorrektur die Phase der empfangenen Datensymbole $x(k)$ durch Multiplikation von $x(k)$ mit

$$e^{-i\Delta\omega \cdot (k-K_0)}$$

korrigieren, wobei $K_0$ der Index eines zur Trainingsfolge gehörigen Datensymbols ist. Durch den Term $(k-K_0)$ kann erreicht werden, daß das zur Trainingsfolge gehörige empfangene Datensymbol $x(K_0)$ durch den Phasenkorrekturfaktor nicht verändert wird.

Da in der Regel $\Delta\omega \ll 2\pi$ gilt, werden auch die übrigen zur Trainingsfolge gehörigen Datensymbole $x(K_1)$, ... $x(K_2)$ durch den Phasenkorrekturfaktor

$$e^{-i\Delta\omega\cdot(k-K_0)}$$

nur geringfügig verändert. Die phasenkorrigierten Datensymbole $\bar{x}(K_1)$, ... $\bar{x}(K_2)$ der Trainingsfolge unterscheiden sich daher nur geringfügig von den empfangenen Trainingssymbolen $x(K_1)$, ... $x(K_2)$. Deshalb kann die anfangs durchgeführte Kanalschätzung weiter verwendet werden, obwohl bei dieser Kanalschätzung ja die phasenfehlerbehafteten Datensymbole $x(K_1)$, ... $x(K_2)$ verwendet wurden. Die Bestimmung der Kanalkoeffizienten $h_0$, ... $h_L$ muß daher nicht wiederholt werden. Es ist zweckmäßig,

$$K_0 = \frac{K_1 + K_2}{2}$$

zu definieren.

Gemäß einer weiteren vorteilhaften Ausführungsform der Erfindung werden durch die Empfangseinheit GMSK-modulierte Datensymbole dekodiert. Dadurch kann eine Verringerung der durch Frequenzfehler verursachten Bitfehlerrate erreicht werden.

Insbesondere ist es von Vorteil, wenn die Empfangseinheit 8-PSK modulierte Datensymbole dekodiert. Bei der 8-PSK-Modulation wird ein Signalraum mit achtstufigen Datensymbolen verwendet. Insofern beträgt der Phasenabstand benachbarter Signalraumpunkte 45°. Die Verwendung der erfindungsgemäßen Frequenzfehlerkorrektur bei der 8-PSK-Modulation kann die Phasenfehler wesentlich verringern und ermöglicht so eine höhere Trefferquote bei der Demodulation.

Gemäß einer weiteren vorteilhaften Ausführungsform der Erfindung werden durch die Empfangseinheit Datensymbole im EDGE-Standard dekodiert. Der EDGE-Standard (Enhanced Data Rates for GSM Evolution) ist ein Nachfolgestandard von GSM, bei dem die 8-PSK-Modulation anstelle der GMSK-Modulation eingesetzt wird. EDGE und insbesondere der Dienst EGPRS (Enhanced GPRS) ermöglichen eine weitere Steigerung der Datenübertragungsrate. Durch den Einsatz der erfindungsgemäßen Frequenzkorrektur können Frequenzfehler wie die Dopplerverschiebung weitgehend eliminiert werden.

Nachfolgend wird die Erfindung anhand eines in der Zeichnung dargestellten Ausführungsbeispiels weiter beschrieben. Es zeigen:

Fig. 1      eine Empfangseinheit gemäß dem Stand der Technik, welche einen Kanalschätzer und einen Kanalentzerrer umfaßt;

Fig. 2      die Struktur eines Bursts von empfangenen Datensymbolen;

Fig. 3      eine Übersicht über die erfindungsgemäße Empfangseinheit mit automatischer Frequenzkorrektur;

Fig. 4      das erfindungsgemäße Ablaufschema zur Bestimmung der Frequenzverschiebung $\Delta\omega$;

Fig. 5      die Durchführung der erfindungsgemäßen Frequenzkorrektur.

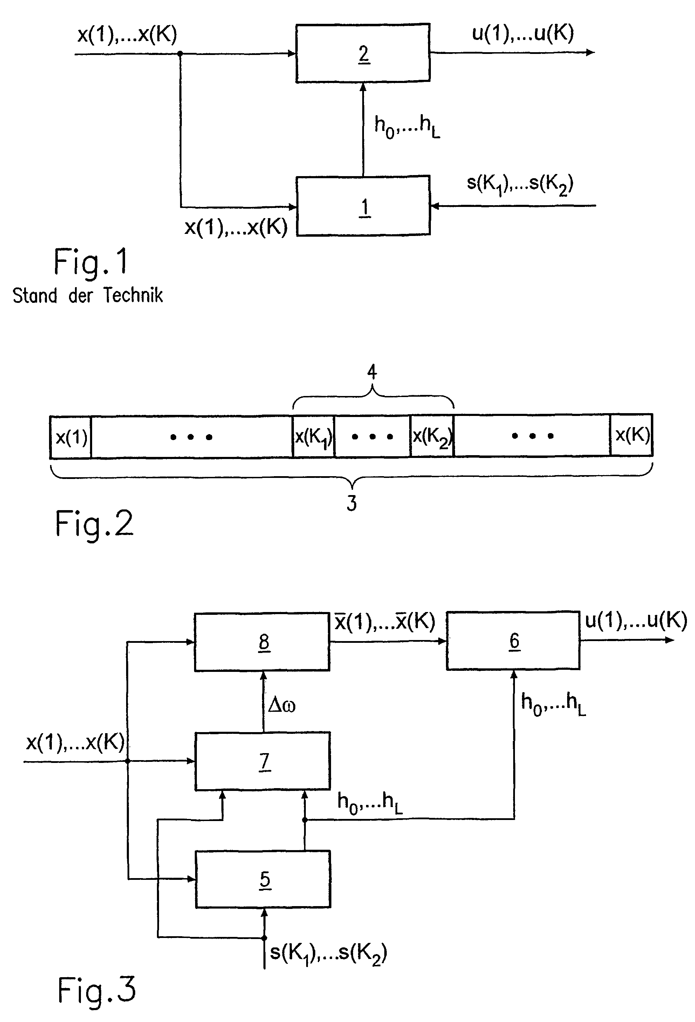

In Fig. 1 ist eine Empfangseinheit für TDMA-Systeme gemäß dem Stand der Technik dargestellt, welche einen Kanalschätzer 1 sowie einen Kanalentzerrer 2 umfaßt. Die empfangenen Datensymbole $x(1)$, ... $x(K)$ eines Datenbursts werden dem Kanalschätzer 1 und dem Kanalentzerrer 2 zugeführt.

Die Struktur eines Datenbursts ist anhand von Fig. 2 dargestellt. Der Datenburst 3 umfaßt die vom Übertragungskanal verzerrten empfangenen Datensymbole $x(1)$ ... $x(K)$. Mit jedem Datenburst 3 wird eine Trainingsfolge 4 übertragen. Die empfangenen Trainingssymbole $x(K_1)$, ... $x(K_2)$ der verzerrten Trainingsfolge 4 sind Bestandteil des empfangenen Datenbursts 3. Die zugrundeliegenden Trainingssymbole $s(K_1)$, ... $s(K_2)$ der unverzerrten Trainingsfolge sind empfängerseitig bekannt und stehen dem Kanalschätzer 1 zur Verfügung. Aufgrund einer Korrelationsanalyse zwischen der unverzerrten Trainingsfolge $s(K_1)$, ... $s(K_2)$ und der empfangenen, verzerrten Trainingsfolge $x(K_1)$, ... $x(K_2)$ kann der Kanalschätzer 1 das Multipfad-Übertragungsverhalten des Übertragungskanals bestimmen.

Zur Modellierung des Kanalverhaltens werden Kanalkoeffizienten $h_0$, ... $h_L$ bestimmt, welche den jeweiligen Anteil verschieden stark verzögerter Signalkomponenten am Gesamtsignal angeben. L bezeichnet dabei das sogenannte Kanalgedächtnis. Die Kanalkoeffizienten werden dem Kanalentzerrer 2 zugeführt, der die empfangenen Datensymbole x(k) entsprechend diesen Kanalkoeffizienten entzerrt, um die entzerrten Datensymbole u(1), ... u(K) zu erhalten.

In Fig. 3 ist die erfindungsgemäß modifizierte Empfangseinheit im Überblick dargestellt. Zusätzlich zu dem Kanalschätzer 5 und dem Kanalentzerrer 6 umfaßt die erfindungsgemäße Empfangseinheit einen Frequenzschätzer 7 sowie eine Einheit zur Frequenzkorrektur 8.

Der Kanalschätzer 5 bestimmt anhand der empfangenen Datensymbole x(k) sowie der bekannten Trainings-symbole $s(K_1)$, ... $s(K_2)$ der unverzerrten Trainingsfolge die Kanalkoeffizienten $h_0$, ... $h_L$, die sowohl dem Kanalentzerrer 6 als auch dem Frequenzschätzer 7 zugeleitet werden. Der Frequenzschätzer 7 berechnet ausgehend von den empfangenen Datensymbolen x(k), den bekannten Trainingssymbolen $s(K_1)$, ... $s(K_2)$ der unverzerrten Trainingsfolge sowie den Kanalkoffizienten $h_0$, ... $h_L$ die Frequenzverschiebung $\Delta\omega$ der empfangenen Datensymbole.

Die vom Frequenzschätzer 7 ermittelte Frequenzverschiebung $\Delta\omega$ wird der Einheit zur Frequenzkorrektur 8 zugeführt, die entsprechend dieser Frequenzverschiebung eine Phasenkorrektur der empfangenen Datensymbole x (1), ... x(K) durchführt und die phasenkorrigierten Datensymbole $\bar{x}$(1), ... $\bar{x}$(K) erzeugt.

Die phasenkorrigierten Datensymbole $\bar{x}$(1), ... $\bar{x}$(K) weisen noch die für den Übertragungskanal charakterische Intersymbol-Interferenz (ISI) auf und müssen deshalb durch den Kanalentzerrer 6 mittels der Kanalkoeffizienten $h_0$, ... $h_L$ entzerrt werden. Am Ausgang des Kanalentzerrers 6 erscheinen die entzerrten Datensymbole u(1), ... u(K).

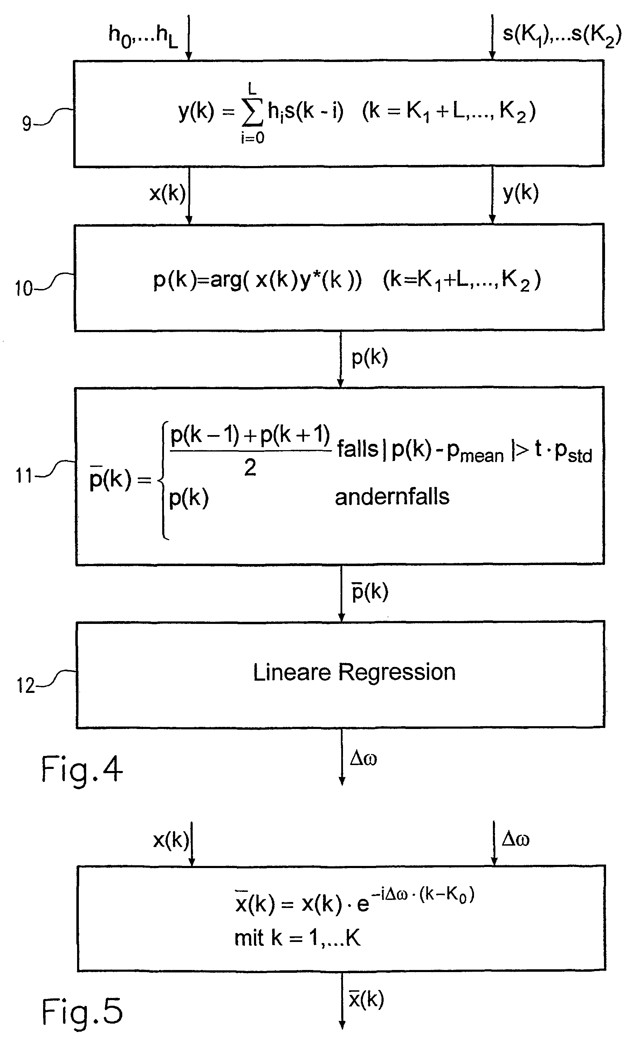

Anhand von Fig. 4 soll beschrieben werden, wie der Frequenzschätzer 7 aus den Datensymbolen der verzerrten und der unverzerrten Trainingsfolge sowie aus den Kanalkoeffizienten die Frequenzverschiebung $\Delta\omega$ bestimmt.

Dazu wird in einem ersten, als "Remodulation" bezeichneten Schritt 9 eine frequenzfehlerfreie Folge von Datensymbolen y(k) berechnet. Man betrachtet dazu die Trainingssymbole $s(K_1)$, ... $s(K_2)$ der unverzerrten Trainings-folge, die der Frequenzschätzer 7 kennt. Es wird berechnet, wie diese bekannten, unverzerrten Trainingssymbole durch die Kanalkoeffizienten $h_0$, ... $h_L$ verzerrt werden. Zur Durchführung dieser Berechnung werden die vom Kanal-schätzer 5 ermittelten Kanalkoeffizienten $h_0$, ... $h_L$ herangezogen. Die Formel zur Berechnung der verzerrten, frequenzfehlerfreien Datensymbole y(k) lautet:

$$y(k) = \sum_{i=0}^{L} h_i \cdot s(k - i)$$

mit $k = K_1 + L$, ... $K_2$, oder explizit ausgeschrieben

$$y(K_1 + L) = h_0 \cdot s(K_1 + L) + ... + h_L \cdot s(K_1)$$
$$\vdots \qquad \qquad \vdots \qquad \qquad \qquad \vdots$$
$$y(K_2) \qquad = h_0 \cdot s(K_2) \qquad + ... + h_L \cdot s(K_2 - L)$$

Es stehen genau $(K_2 - K_1 + 1)$ bekannte Trainingssymbole $s(K_1)$, ... $s(K_2)$ zur Verfügung, aus denen sich $(K_2 - K_1 - L + 1)$ frequenzfehlerfreie Datensymbole $y(K_1 + L)$, ... $y(K_2)$ berechnen lassen, denn für die Berechnung von jedem Wert von y(k) müssen wegen des Kanalgedächtnisses L genau $(L + 1)$ Werte von s(k) berücksichtigt werden.

Wenn kein Frequenzfehler vorhanden ist, stimmen die errechneten frequenzfehlerfreien Datensymbole y(k) mit den empfangenen Datensymbolen x(k) überein. Wenn dagegen ein Frequenzfehler vorhanden ist, dann weicht die Phase der frequenzfehlerfreien y(k) von der Phase der frequenzfehlerbehafteten x(k) in charakteristischer Weise ab: Als Differenz der beiden Phasen ergibt sich eine Phasenrampe, wobei die Steigung der Phasenrampe durch die Fre-quenzverschiebung $\Delta\omega$ festgelegt ist.

Schritt 10 in Fig. 4 dient zur Bestimmung der Phasendifferenzen p(k) zwischen den empfangenen Datensymbolen x(k) und den berechneten, frequenzfehlerfreien Datensymbolen y(k). Diese Folge p(k) kann mittels folgender Formel berechnet werden:

$$p(k) = \arg(x(k) \cdot y^*(k)), \quad k = K_1 + L, ... K_2 .$$

Dabei bezeichnet $y^*$ (k) die Komplexkonjugierte von y(k). Der Operator arg(...) liefert jeweils die Phase seines komplexen Arguments.

Am Ende von Schritt 10 steht somit eine Folge von $(K_2 - K_1 - L + 1)$ Werten der Folge p(k) von Phasendifferenzen zur Verfügung. Die Erfahrung hat gezeigt, daß die ermittelten Werte von p(k) den Phasenverlauf zwar im wesentlichen widerspiegeln, daß es aber einzelne stark abweichende Folgenwerte gibt, die bei der Frequenzschätzung unberücksichtigt bleiben sollten. Eine Möglichkeit wäre, die Phasenfunktion p(k) mittels eines Tiefpasses zu filtern. Effektiver ist es aber, im nächsten Schritt 11 eine statistische Glättung der Phasenfunktion p(k) durchzuführen. Dazu werden zunächst das arithmetische Mittel $p_{mean}$ sowie die Standardabweichung $p_{std}$ von p (k) berechnet:

$$p_{mean} = \frac{1}{K_2 - K_1 - L + 1} \sum_{k=K_1+L}^{K_2} p(k)$$

$$p_{std} = \sqrt{\frac{1}{K_2 - K_1 - L + 1} \sum_{k=K_1+L}^{K_2} (p(k) - p_{mean})^2}$$

Anschließend wird für jeden Folgenwert p(k) getestet, ob die auf die Standardabweichung bezogene Abweichung dieses Folgenwerts vom arithmetischen Mittel größer ist als ein vorgegebener Schwellwert t. Wenn dies der Fall ist, wenn also gilt,

$$\frac{|p(k) - p_{mean}|}{p_{std}} > t$$

dann handelt es sich bei dem entsprechenden Wert p(k) um einen Ausreißer. Dieser Ausreißerwert wird dann durch das Mittel des vorhergehenden Werts p(k - 1) und des nachfolgenden Werts p(k + 1) ersetzt. Wenn dagegen der vorgegebene Schwellwert t nicht überschritten wird, dann bleibt der Folgenwert p(k) unverändert.

Der Verfahrensschritt 11 liefert also eine geglättete Folge $\bar{p}$ (k) von Phasendifferenzen gemäß folgender Vorschrift:

$$\bar{p}(k) = \begin{cases} \dfrac{p(k-1) + p(k+1)}{2} & \text{falls } |p(k) - p_{mean}| > t \cdot p_{std} \\[2ex] p(k) & \text{andernfalls} \end{cases}$$

Ausgehend von dieser geglätteten Folge $\bar{p}$ (k) von Phasendifferenzen kann im nächsten Verfahrensschritt 12 die Frequenzverschiebung $\Delta\omega$ bestimmt werden. Um die Steigung von $\bar{p}$ (k) (mit k = $K_1$ + L, ... $K_2$) zu ermitteln, wird eine lineare Regressionsanalyse nach der Methode der minimalen Fehlerquadrate durchgeführt. Zur Vereinfachung der Schreibweise wird eine Folge

$$q(n) = \bar{p}(k - K_1 - L)$$

mit n = 0,1, ..., N - 1 definiert, wobei N = $K_2$ - $K_1$ - L + 1 die Zahl der verfügbaren Folgenwerte von $\bar{p}$ (k) bezeichnet.

Um die Frequenzverschiebung $\Delta\omega$ zu erhalten, muß das folgende System linearer Gleichungen gelöst werden:

$$\begin{bmatrix} \dfrac{N(N-1)(2N-1)}{6} & \dfrac{N(N-1)}{2} \\ \dfrac{N(N-1)}{2} & N \end{bmatrix} \begin{bmatrix} \Delta\omega \\ c \end{bmatrix} = \begin{bmatrix} \displaystyle\sum_{n=0}^{N-1} n \cdot q(n) \\ \displaystyle\sum_{n=0}^{N-1} q(n) \end{bmatrix}$$

Mit der Berechnung der Frequenzverschiebung $\Delta\omega$ sind die vom Frequenzschätzer 7 durchgeführten Verfahrensschritte 9 bis 12 abgeschlossen.

Die ermittelte Frequenzverschiebung $\Delta\omega$ wird, wie aus Fig. 3 erkennbar ist, der Einheit zur Frequenzkorrektur 8 zugeführt. Die Einheit zur Frequenzkorrektur 8 korrigiert die Phasen der empfangenen Datensymbole x(k), um die Frequenzverschiebung $\Delta\omega$ zu kompensieren.

Dies ist in Fig. 5 dargestellt. Die empfangenen Datensymbole x(k) werden mit einem komplexwertigen Sinus-Signal der Frequenz $\Delta\omega$ multipliziert:

$$\bar{x}(k) = x(k) \cdot e^{-i\Delta\omega \cdot (k-K_0)}, \ k = 1,...K$$

Dabei bezeichnet $K_0$ einen Index, der zwischen $K_1$ und $K_2$ liegt. Für $k = K_0$ wird der Exponent der komplexwertigen SinusFunktion 0, und die Phase des Folgenwerts $x(K_0)$ bleibt unverändert. Beispielsweise kann

$$K_0 = \frac{K_1 + K_2}{2}$$

gewählt werden.

Da in der Regel $\Delta\omega \ll 2\pi$ gilt, werden auch die übrigen zur Trainingsfolge gehörigen Trainingssymbole $x(K_1), ... x(K_2)$ nur geringfügig verändert. Dadurch wird sichergestellt, daß die anfänglich durchgeführte Kanalschätzung zur Ermittlung der Kanalkoeffizienten $h_0, ... h_L$ weiter verwendet werden kann.

Wegen

$$e^{-i\Delta\omega \cdot k} = \cos(\Delta\omega \cdot k) - i \cdot \sin(\Delta\omega \cdot k)$$

kann die Phasenkorrektur der komplexen Folge x(k) mit einer Sinus-Kosinus-Koeffiziententabelle durchgeführt werden. Eine andere Möglichkeit ist, den sogenannten CORDIC-Algorithmus zu verwenden, der in der Patentanmeldung 199 48 899.1, "Verfahren und Schaltungsanordnung zur digitalen Frequenzkorrektur eines Signals", beschrieben ist.

Die Einheit 8 zur Frequenzkorrektur liefert eine Folge von phasenkorrigierten Datensymbolen $\bar{x}(1),... \bar{x}(K)$, die noch durch Intersymbol-Interferenz verzerrt sind. Diese Folge von phasenkorrigierten Datensymbolen $\bar{x}(1),... \bar{x}(K)$ wird dem Kanalentzerrer 6 zugeführt, der mit Hilfe der Kanalkoeffizienten $h_0, ... h_L$ die entzerrten Datensymbole u(1), ... u(K) bestimmt. Zur Kanalentzerrung kann ein trellis-basierter Kanalentzerrer verwendet werden, der die phasenkorrigierten Datensymbole $\bar{x}(1),... \bar{x}(K)$ mittels des Viterbi-Verfahrens entzerrt.

Bei der erfindungsgemäßen Empfangseinheit wird also nach der Kanalschätzung, aber vor der Kanalentzerrung eine explizite automatische Frequenzkorrektur der empfangenen Datensymbole x(k) durchgeführt. Anders als im Stand der Technik werden nicht die empfangenen Datensymbole x(k), sondern die phasenkorrigierten Datensymbole $\bar{x}(k)$ entzerrt. Dadurch ist es möglich, die Bitfehlerrate der entzerrten Datensymbolen u(1), ..., u(K) signifikant zu verringern.

**Patentansprüche**

1. Empfangseinheit für die Mobilfunkübertragung, welche aufweist

   - einen Kanalschätzer (5), der die Kanalkoeffizienten $h_0,...h_L$ zur Modellierung des Übertragungskanals ermittelt, wobei L das Kanalgedächtnis bezeichnet,
   - Mittel zur Frequenzschätzung (7), welche eine Folge p(k) von Phasendifferenzen zwischen den empfangenen Datensymbolen x(k) und den aus einer Trainingsfolge abgeleiteten frequenzfehlerfreien Datensymbolen y(k) bestimmen und aus der Folge p(k) die Frequenzverschiebung $\Delta\omega$ der empfangenen Datensymbole x(k) bestimmen,

- Mittel zur Frequenzkorrektur (8), welche in Abhängigkeit von der Frequenzverschiebung $\Delta\omega$ jeweils die Phase der empfangenen Datensymbole x(k) korrigieren,
- einen Kanalentzerrer (6), der die phasenkorrigierten Datensymbole $\bar{x}$(k) unter Verwendung der vom Kanalschätzer (5) ermittelten Kanalkoeffizienten entzerrt,

**dadurch gekennzeichnet,**

- **daß** für den Fall, daß ein Folgenwert p(k) der Folge von Phasendifferenzen vom Mittelwert $p_{mean}$ der Folge um mehr als einen vorgegebenen Schwellenwert abweicht, eine Glättung der Folge p(k) durchgeführt wird, indem der entsprechende Folgenwert p(k) durch eine Linearkombination des vorhergehenden Folgenwerts p(k-1) und des nachfolgenden Folgenwerts p(k+1) ersetzt wird, und
- **daß** die Mittel zur Frequenzschätzung (7) eine lineare Regressionsanalyse der gegen die Zeit aufgetragenen und gegebenenfalls geglätteten Folge p(k) von Phasendifferenzen durchführen und aus der Steigung die Frequenzverschiebung $\Delta\omega$ bestimmen.

2. Empfangseinheit nach Anspruch 1,
   **dadurch gekennzeichnet, daß**
   die Mittel zur Frequenzschätzung (7) die frequenzfehlerfreien Datensymbole y(k) durch Remodulation der unverzerrten Trainingssymbole $s(K_1),...s(K_2)$ mit den Kanalkoeffizienten $h_0,...h_L$ erzeugen, wobei $s(K_1)$ das erste Trainingssymbol und $s(K_2)$ das letzte Trainingssymbol der unverzerrten Trainingsfolge bezeichnen.

3. Empfangseinheit nach Anspruch 1 oder Anspruch 2,
   **dadurch gekennzeichnet, daß**
   die Remodulation der Trainingssymbole $s(K_1),...s(K_2)$ mit den Kanalkoeffizienten $h_0,...h_L$ gemäß der Formel

$$y(k) = \sum_{i=0}^{L} h_i \cdot s(k - i)$$

mit $k = K_1 + L,... K_2$ erfolgt, wobei $s(K_1)$ das erste Trainingssymbol und $s(K_2)$ das letzte Trainingssymbol der unverzerrten Trainingsfolge bezeichnet.

4. Empfangseinheit nach einem der Ansprüche 1 bis 3,
   **dadurch gekennzeichnet, daß**
   die Mittel zur Frequenzschätzung (7) die Folge p(k) von Phasendifferenzen durch Auswerten der Phase des Ausdrucks $\frac{x(k)}{y(k)}$ oder des Ausdrucks $\frac{y(k)}{x(k)}$ erzeugen.

5. Empfangseinheit nach einem der Ansprüche 1 bis 3,
   **dadurch gekennzeichnet, daß**
   die Mittel zur Frequenzschätzung (7) die Folge p(k) von Phasendifferenzen durch Auswerten der Phase des Ausdrucks x*(k) · y(k) oder des Ausdrucks x(k) · y*(k) erzeugen, wobei x*(k), y*(k) die Komplexkonjugierten von x(k), y(k) bezeichnen.

6. Empfangseinheit nach einem der Ansprüche 1 bis 5,
   **dadurch gekennzeichnet, daß**
   die Mittel zur Frequenzkorrektur (8) die Phase der empfangenen Datensymbole x(k) durch Multiplikation von x(k) mit $e^{-i\Delta\omega \cdot k}$ korrigieren.

7. Empfangseinheit nach einem der Ansprüche 1 bis 5,
   **dadurch gekennzeichnet, daß**
   die Mittel zur Frequenzkorrektur (8) die Phase der empfangenen Datensymbole x(k) durch Multiplikation von x(k) mit $e^{-i\Delta\omega \cdot (k-K_0)}$ korrigieren, wobei $K_0$ der Index eines zur Trainingsfolge gehörigen Datensymbols ist.

8. Empfangseinheit nach einem der Ansprüche 1 bis 7,

**dadurch gekennzeichnet, daß**
die Empfangseinheit GMSK-modulierte Datensymbole dekodiert.

9. Empfangseinheit nach einem der Ansprüche 1 bis 7,
**dadurch gekennzeichnet, daß**
die Empfangseinheit 8-PSK-modulierte Datensymbole dekodiert.

10. Empfangseinheit nach einem der Ansprüche 1 bis 7,
**dadurch gekennzeichnet, daß**
die Empfangseinheit Datensymbole im EDGE-Standard dekodiert.

11. Verfahren zur Korrektur des Frequenzfehlers bei der Mobilfunkübertragung von Datensymbolen,
**gekennzeichnet durch** folgende Schritte:

a) Ermitteln von Kanalkoeffizienten $h_0,...h_L$ zur Modellierung des Übertragungskanals, wobei L das Kanalgedächtnis bezeichnet,
b) Bestimmen einer Folge p(k) von Phasendifferenzen zwischen den empfangenen Datensymbolen x(k) und den aus einer Trainingsfolge abgeleiteten frequenzfehlerfreien Datensymbolen y(k),
c) Bestimmen der Frequenzverschiebung $\Delta\omega$ der empfangenen Datensymbole x(k) aus der in Schritt b) bestimmten Folge p(k),
d) Korrigieren der Phase der empfangenen Datensymbole x(k) in Abhängigkeit von der in Schritt c) ermittelten Frequenzverschiebung $\Delta\omega$,
e) Entzerren der phasenkorrigierten Datensymbole $\bar{x}(k)$ unter Verwendung der in Schritt a) ermittelten Kanalkoeffizienten $h_0,...h_L$,

**dadurch gekennzeichnet,** daß
der Schritt c) folgende Unterschritte umfaßt:

c1) Glätten der Folge p(k) für den Fall, daß ein Folgenwert p(k) der Folge von Phasendifferenzen vom Mittelwert $p_{mean}$ der Folge um mehr als einen vorgegebenen Schwellenwert abweicht, indem der entsprechende Folgenwert p(k) **durch** eine Linearkombination des vorhergehenden Folgenwerts p(k-1) und des nachfolgenden Folgenwerts p(k+1) ersetzt wird,
c2) Durchführen einer linearen Regressionsanalyse der gegen die Zeit aufgetragenen und gegebenenfalls in Schritt c1) geglätteten Folge p(k),
c3) Bestimmen der Frequenzverschiebung $\Delta\omega$ aus der **durch** die in Schritt c2) durchgeführten linearen Regressionsanalyse erhaltenen Steigung.

12. Verfahren nach Anspruch 11,
**dadurch gekennzeichnet, daß**
die frequenzfehlerfreien Datensymbole y(k) aus den Trainingssymbolen $s(K_1),...s(K_2)$ der unverzerrten Trainingsfolge durch Remodulation mit den Kanalkoeffizienten $h_0,...h_L$ erhalten werden, wobei $s(K_1)$ das erste Trainingssymbol und $s(K_2)$ das letzte Trainingssymbol der unverzerrten Trainingsfolge bezeichnet.

13. Verfahren nach Anspruch 11 oder Anspruch 12,
**dadurch gekennzeichnet, daß**
die Remodulation der Trainingssymbole $s(K_1),...s(K_2)$ mit den Kanalkoeffizienten $h_0,...h_L$ gemäß der Formel

$$y(k) = \sum_{i=0}^{L} h_i \cdot s(k - i)$$

mit $k = K_i + L,...K_2$ erfolgt, wobei $s(K_1)$ das erste Trainingssymbol und $s(K_2)$ das letzte Trainingssymbol der unverzerrten Trainingsfolge bezeichnet.

14. Verfahren nach einem der Ansprüche 11 bis 13,
**dadurch gekennzeichnet, daß**
die Folge p(k) von Phasendifferenzen zwischen den empfangenen Datensymbolen x(k) und den frequenzfehlerfreien Datensymbolen y(k) als Phase des Ausdrucks $\frac{x(k)}{y(k)}$ oder des Ausdrucks $\frac{y(k)}{x(k)}$ erhalten wird.

**15.** Verfahren nach einem der Ansprüche 11 bis 13,
**dadurch gekennzeichnet, daß**
die Folge p(k) von Phasendifferenzen zwischen den empfangenen Datensymbolen x(k) und den frequenzfehlerfreien Datensymbolen y(k) als Phase des Ausdrucks x*(k) · y(k) oder des Ausdrucks x(k) · y*(k) erhalten wird, wobei x*(k), y*(k) die Komplexkonjugierten von x(k), y(k) bezeichnen.

**16.** Verfahren nach einem der Ansprüche 11 bis 15,
**dadurch gekennzeichnet, daß**
die Phasenkorrektur eines Werts x(k) der empfangenen Datensymbolfolge durch Multiplikation von x(k) mit $e^{-i\Delta\omega \cdot k}$ durchgeführt wird.

**17.** Verfahren nach einem der Ansprüche 11 bis 15,
**dadurch gekennzeichnet, daß**
die Phasenkorrektur eines Werts x(k) der empfangenen Datensymbolfolge durch Multiplikation von x(k) mit $e^{-i\Delta\omega \cdot (k-K_0)}$ durchgeführt wird, wobei $K_0$ der Index eines zur Trainingsfolge gehörigen Datensymbols ist.

**18.** Verfahren nach einem der Ansprüche 11 bis 17,
**dadurch gekennzeichnet, daß**
die empfangenen Datensymbole entsprechend dem 8-PSK-Standard demoduliert werden.

**19.** Verfahren nach einem der Ansprüche 11 bis 17,
**dadurch gekennzeichnet, daß**
die empfangenen Datensymbole entsprechend dem EDGE-Standard demoduliert werden.

**20.** Verfahren nach einem der Ansprüche 11 bis 17,
**dadurch gekennzeichnet, daß**
die empfangenen Datensymbole entsprechend dem GMSK-Standard demoduliert werden.

**Claims**

**1.** Receiving unit for mobile radio transmission, exhibiting the following:

- a channel estimator (5) which determines the channel coefficients $h_0,...h_L$ for modelling the transmission channel, where L is the channel memory,
- means for frequency estimation (7) which determine a sequence p(k) of phase differences between the received data symbols x(k) and the frequency-error-free data symbols y(k) derived from a training sequence and determine the frequency shift $\Delta\omega$ of the received data symbols x(k) from the sequence p(k),
- means for frequency correction (8) which in each case correct the phase of the received data symbols x(k) in dependence on the frequency shift $\Delta\omega$,
- a channel equalizer (6) which equalizes the phase-corrected data symbols $\bar{x}(k)$ by using the channel coefficients determined by the channel estimator (5),

**characterized in that**

- in the case where a sequence value p(k) of the sequence of phase differences deviates from the mean value $p_{mean}$ of the sequence by more than a predetermined threshold value, a smoothing of the sequence p(k) is performed by replacing the corresponding sequence value p(k) with a linear combination of the preceding sequence value p(k-1) and of the subsequent sequence value p(k+1), and **in that**
- the means for frequency estimation (7) perform a linear regression analysis of the sequence p(k) of phase differences, which is plotted against time and possibly smoothed, and determine the frequency shift $\Delta\omega$ from the slope.

**2.** The receiving unit according to Claim 1, **characterized in that** the means for frequency estimation (7) generate the frequency-error-free data symbols y(k) by remodulation of the undistorted training symbols $s(K_1),...s(K_2)$ with the channel coefficients $h_0,...h_L$, where $s(K_1)$ is the first training symbol and $s(K_2)$ is the last training symbol of the undistorted training sequence.

**3.** The receiving unit according to Claim 1 or Claim 2, **characterized in that** the remodulation of the training symbols $s(K_1),...s(K_2)$ with the channel coefficients $h_0,...h_L$ is effected in accordance with the formula

$$y(k) = \sum_{i=0}^{L} h_i \cdot s(k - i)$$

with $k = K_1 + L,... K_2$, where $s(K_1)$ is the first training symbol and $s(K_2)$ is the last training symbol of the undistorted training sequence.

**4.** The receiving unit according to one of Claims 1 to 3, **characterized in that** the means for frequency estimation (7) generate the sequence $p(k)$ of phase differences by evaluating the phase of the expression $\frac{x(k)}{y(k)}$ or of the expression $\frac{y(k)}{x(k)}$.

**5.** The receiving unit according to one of Claims 1 to 3, **characterized in that** the means for frequency estimation (7) generate the sequence $p(k)$ of phase differences by evaluating the phase of the expression $x^*(k) \cdot y(k)$ or of the expression $x(k) \cdot y^*(k)$, where $x^*(k)$, $y^*(k)$ are the complex conjugates of $x(k)$, $y(k)$.

**6.** The receiving unit according to one of Claims 1 to 5, **characterized in that** the means for frequency correction (8) correct the phase of the received data symbols $x(k)$ by multiplying $x(k)$ by $e^{-i\Delta\omega\cdot k}$.

**7.** The receiving unit according to one of Claims 1 to 5, **characterized in that** the means for frequency correction (8) correct the phase of the received data symbols $x(k)$ by multiplying $x(k)$ by $e^{-i\Delta\omega\cdot(k-K_0)}$ where $K_0$ is the index of a data symbol belonging to the training sequence.

**8.** The receiving unit according to one of Claims 1 to 7, **characterized in that** the receiving unit decodes GMSK-modulated data symbols.

**9.** The receiving unit according to one of Claims 1 to 7, **characterized in that** the receiving unit decodes 8-PSK-modulated data symbols.

**10.** The receiving unit according to one of Claims 1 to 7, **characterized in that** the receiving unit decodes data symbols in the EDGE standard.

**11.** Method for correcting the frequency error in the mobile radio transmission of data symbols, **characterized by** the following steps:

a) Determining channel coefficients $h_0,...h_L$ for modelling the transmission channel, where L is the channel memory,
b) Determining a sequence $p(k)$ of phase differences between the received data symbols $x(k)$ and the frequency-error-free data symbols $y(k)$ derived from a training sequence,
c) Determining the frequency shift $\Delta\omega$ of the received data symbols $x(k)$ from the sequence $p(k)$ determined in step b),
d) Correcting the phase of the received data symbols $x(k)$ in dependence on the frequency shift $\Delta\omega$ determined in step c),
e) Equalizing the phase-corrected data symbols $\bar{x}(k)$ by using the channel coefficients $h_0,...h_L$ determined in step a),

**characterized in that** step c) comprises the following substeps:

c1) Smoothing of the sequence $p(k)$ for the case where a sequence value $p(k)$ of the sequence of phase differences deviates from the mean value $p_{mean}$ of the sequence by more than a predetermined threshold value, the corresponding sequence value $p(k)$ is replaced by a linear combination of the preceding sequence value $p(k-1)$ and of the subsequent sequence value $p(k+1)$,
c2) Performing a linear regression analysis of the sequence $p(k)$ plotted against time and possibly smoothed in step c1),
c3) Determining the frequency shift $\Delta\omega$ from the slope obtained by the linear regression analysis performed in step c2).

12. The method according to Claim 11,
**characterized in that** the frequency-error-free data symbols y(k) are obtained from the training symbols s(K₁),... s(K₂) of the undistorted training sequence by remodulation with the channel coefficients $h_0,...h_L$. where $s(K_1)$ is the first training symbol and $s(K_2)$ is the last training symbol of the undistorted training sequence.

13. The method according to Claim 11 or Claim 12, **characterized in that** the remodulation of the training symbols s (K₁),...s(K₂) with the channel coefficients $h_0...h_L$ is effected in accordance with the formula

$$y(k) = \sum_{i=0}^{L} h_i \cdot s(k - i)$$

with $k = K_1 + L, ...K_2$, where $s(K_1)$ is the first training symbol and $s(K_2)$ is the last training symbol of the undistorted training sequence.

14. The method according to one of Claims 11 to 13, **characterized in that** the sequence p(k) of phase differences between the received data symbols x(k) and the frequency-error free data symbols y(k) is obtained as phase of the expression $\frac{x(k)}{y(k)}$ or of the expression $\frac{y(k)}{x(k)}$.

15. The method according to one of Claims 11 to 13, **characterized in that** the sequence p(k) of phase differences between the received data symbols x(k) and the frequency-error-free data symbols y(k) is obtained as phase of the expression $x^*(k) \cdot y(k)$ or of the expression $x(k) - y^*(k)$, where $x^*(k), y^*(k)$ are the complex conjugates of x(k), y(k).

16. The method according to one of Claims 11 to 15, **characterized in that** the phase correction of a value x(k) of the received sequence of data symbols is performed by multiplying x(k) by $e^{-i\Delta\omega\cdot k}$.

17. The method according to one of Claims 11 to 15, **characterized in that** the phase correction of a value x(k) of the received sequence of data symbols is performed by multiplying x(k) by $e^{-i\Delta\omega\cdot(k-K_0)}$, where $K_0$ is the index of a data symbol belonging to the training sequence.

18. The method according to one of Claims 11 to 17, **characterized in that** the received data symbols are demodulated in accordance with the 8-PSK standard.

19. The method according to one of Claims 11 to 17, **characterized in that** the received data symbols are demodulated in accordance with the EDGE standard.

20. The method according to one of Claims 11 to 17, **characterized in that** the received data symbols are demodulated in accordance with the GSMK standard.

## Revendications

1. Unité réceptrice pour la transmission en radiocommunication mobile, comportant

   - un estimateur de canal (5) qui détermine les coefficients de canal $h_0, ..., h_L$ pour la modélisation du canal de transmission, L désignant la mémoire de canal,
   - des moyens d'estimation de fréquence (7) qui déterminent une séquence p (k) de différences de phase entre les symboles de données reçus x (k) et les symboles de données sans erreur de fréquence y (k) déduits d'une séquence d'apprentissage et qui déterminent à partir de la séquence p (k) le décalage de fréquence $\Delta\omega$ des symboles de données reçus x (k),
   - des moyens de correction de fréquence (8) qui corrigent en fonction du décalage de fréquence $\Delta\omega$ à chaque fois la phase des symboles de données reçus x (k),

- un égaliseur de canal (6) qui égalise les symboles de données à phase corrigée x (k) en utilisant les coefficients de canal déterminés par l'estimateur de canal (5),

**caractérisée par le fait que**

- si une valeur de séquence p (k) de la séquence de différences de phase s'écarte de la valeur moyenne $p_{mean}$ de la séquence de plus d'une valeur de seuil prédéterminée, il s'effectue un lissage de la séquence p (k) de telle sorte que la valeur de séquence p (k) concernée est remplacée par une combinaison linéaire de la valeur de séquence précédente p (k - 1) et de la valeur de séquence suivante p (k + 1), et
- les moyens d'estimation de fréquence (7) effectuent une analyse par régression linéaire de la séquence p (k) de différences de phase qui a été enregistrée en fonction du temps et éventuellement lissée et ils déterminent le décalage de fréquence $\Delta\omega$ à partir de la pente.

2. Unité réceptrice selon la revendication 1,
   **caractérisée par le fait que** les moyens d'estimation de fréquence (7) produisent les symboles de données sans erreur de fréquence y (k) par remodulation des symboles d'apprentissage non déformés $s(K_1)$, ..., $s(K_2)$ avec les coefficients de canal $h_0$, ..., $h_L$, s $(K_1)$ désignant le premier symbole d'apprentissage et s $(K_2)$ le dernier symbole d'apprentissage de la séquence d'apprentissage non déformée.

3. Unité réceptrice selon la revendication 1 ou 2,
   **caractérisée par le fait que** la remodulation des symboles d'apprentissage $s(K_1)$, ..., $s(K_2)$ avec les coefficients de canal $h_0$, ..., $h_L$ s'effectue suivant la formule

$$y\ (k) = \sum_{i=0}^{L} h_i \cdot s\ (k - i)$$

avec k = $K_1$ + L, ..., $K_2$, s $(K_1)$ désignant le premier symbole d'apprentissage et s $(K_2)$ le dernier symbole d'apprentissage de la séquence d'apprentissage non déformée.

4. Unité réceptrice selon l'une des revendications 1 à 3,
   **caractérisée par le fait que** les moyens d'estimation de fréquence (7) produisent la séquence p (k) de différences de phase en évaluant la phase de l'expression $\frac{x(k)}{y(k)}$ ou de l'expression $\frac{y(k)}{x(k)}$.

5. Unité réceptrice selon l'une des revendications 1 à 3,
   **caractérisée par le fait que** les moyens d'estimation de fréquence (7) produisent la séquence p (k) de différences de phase en évaluant la phase de l'expression x * (k) · y (k) ou de l'expression x (k) · y * (k), x * (k) et y * (k) désignant les conjugués complexes de x (k) et y (k).

6. Unité réceptrice selon l'une des revendications 1 à 5,
   **caractérisée par le fait que** les moyens de correction de fréquence (8) corrigent la phase des symboles de données reçus x (k) en multipliant x (k) par $e^{-i\Delta\omega \cdot k}$.

7. Unité réceptrice selon l'une des revendications 1 à 5,
   **caractérisée par le fait que** les moyens de correction de fréquence (8) corrigent la phase des symboles de données reçus x (k) en multipliant x (k) par $e^{-i\Delta\omega \cdot (k-K_0)}$, $K_0$ étant l'indice d'un symbole de données appartenant à la séquence d'apprentissage.

8. Unité réceptrice selon l'une des revendications 1 à 7,
   **caractérisée par le fait que** l'unité réceptrice décode des symboles de données à modulation GMSK.

9. Unité réceptrice selon l'une des revendications 1 à 7,
   **caractérisée par le fait que** l'unité réceptrice décode des symboles de données à modulation 8-PSK.

10. Unité réceptrice selon l'une des revendications 1 à 7,
    **caractérisée par le fait que** l'unité réceptrice décode des symboles de données en standard EDGE.

**11.** Procédé de correction de l'erreur de fréquence lors de la transmission en radiocommunication mobile de symboles de données,
**caractérisé par** les étapes suivantes :

a) détermination de coefficients de canal $h_0$, ..., $h_L$ pour la modélisation du canal de transmission, L désignant la mémoire de canal,
b) détermination d'une séquence p (k) de différences de phase entre les symboles de données reçus x (k) et les symboles de données sans erreur de fréquence y (k) déduits d'une séquence d'apprentissage,
c) détermination du décalage de fréquence $\Delta\omega$ des symboles de données reçus x (k) à partir de la séquence p (k) déterminée à l'étape b),
d) correction de la phase des symboles de données reçus x (k) en fonction du décalage de fréquence $\Delta\omega$ déterminé à l'étape c),
e) égalisation des symboles de données à phase corrigée $\tilde{x}$ (k) en utilisant les coefficients de canal $h_0$, ..., $h_L$ déterminés à l'étape a),

**caractérisé par le fait que** l'étape c) comprend les sous-étapes suivantes :

c1) lissage de la séquence p (k) si une valeur de séquence p (k) de la séquence de différences de phase s'écarte de la valeur moyenne $p_{mean}$ de la séquence de plus d'une valeur de seuil prédéterminée, la valeur de séquence p (k) concernée étant remplacée par une combinaison linéaire de la valeur de séquence précédente p (k - 1) et de la valeur de séquence suivante p (k + 1),
c2) analyse par régression linéaire de la séquence p (k) enregistrée en fonction du temps et éventuellement lissée à l'étape c1),
c3) détermination du décalage de fréquence $\Delta\omega$ à partir de la pente obtenue par l'analyse par régression linéaire de l'étape c2).

**12.** Procédé selon la revendication 11,
**caractérisé par le fait qu'**on obtient les symboles de données sans erreur de fréquence y (k) à partir des symboles d'apprentissage s ($K_1$), ..., s ($K_2$) de la séquence d'apprentissage non déformée par remodulation avec les coefficients de canal $h_0$, ..., $h_L$, s ($K_1$) désignant le premier symbole d'apprentissage et s ($K_2$) le dernier symbole d'apprentissage de la séquence d'apprentissage non déformée.

**13.** Procédé selon la revendication 11 ou 12,
**caractérisé par le fait que** la remodulation des symboles d'apprentissage s ($K_1$), ..., s ($K_2$) avec les coefficients de canal $h_0$, ..., $h_L$ s'effectue suivant la formule

$$y\,(k) = \sum_{i=0}^{L} h_i \cdot s\,(k - i)$$

avec k = $K_1$ + L, ..., $K_2$, s ($K_1$) désignant le premier symbole d'apprentissage et s ($K_2$) le dernier symbole d'apprentissage de la séquence d'apprentissage non déformée.

**14.** Procédé selon l'une des revendications 11 à 13,
**caractérisé par le fait qu'**on obtient la séquence p (k) de différences de phase entre les symboles de données reçus x (k) et les symboles de données sans erreur de fréquence y (k) en tant que phase de l'expression $\frac{x(k)}{y(k)}$ ou de l'expression $\frac{y(k)}{x(k)}$.

**15.** Procédé selon l'une des revendications 11 à 13,
**caractérisé par le fait qu'**on obtient la séquence p (k) de différences de phase entre les symboles de données reçus x (k) et les symboles de données sans erreur de fréquence y (k) en tant que phase de l'expression x * (k) · y (k) ou de l'expression x (k) · y * (k), x * (k) et y * (k) désignant les conjugués complexes de x (k) et y (k).

**16.** Procédé selon l'une des revendications 11 à 15,
**caractérisé par le fait qu'**on effectue la correction de phase d'une valeur x (k) de la séquence de symboles de données reçue en multipliant x (k) par $e^{-i\Delta\omega \cdot k}$.

**17.** Procédé selon l'une des revendications 11 à 15,
**caractérisé par le fait qu'**on effectue la correction de phase d'une valeur x (k) de la séquence de symboles de données reçue en multipliant x (k) par $e^{-i\Delta\omega \cdot (k-K_0)}$, $K_0$ étant l'indice d'un symbole de données appartenant à la séquence d'apprentissage.

**18.** Procédé selon l'une des revendications 11 à 17,
**caractérisé par le fait qu'**on démodule les symboles de données reçus selon le standard 8-PSK.

**19.** Procédé selon l'une des revendications 11 à 17,
**caractérisé par le fait qu'**on démodule les symboles de données reçus selon le standard EDGE.

**20.** Procédé selon l'une des revendications 11 à 17,
**caractérisé par le fait qu'**on démodule les symboles de données reçus selon le standard GMSK.

Fig.1

Stand der Technik

Fig.2

Fig.3

$h_0,...h_L$          $s(K_1),...s(K_2)$

9

$$y(k) = \sum_{i=0}^{L} h_i s(k - i) \quad (k = K_1 + L,..., K_2)$$

$x(k)$          $y(k)$

10

$$p(k) = \arg( x(k)y^*(k)) \quad (k = K_1 + L,..., K_2)$$

$p(k)$

11

$$\bar{p}(k) = \begin{cases} \dfrac{p(k-1) + p(k+1)}{2} & \text{falls} \, |\, p(k) - p_{mean}\, | > t \cdot p_{std} \\ p(k) & \text{andernfalls} \end{cases}$$

$\bar{p}(k)$

12

**Lineare Regression**

**Fig.4**

$\Delta\omega$

$x(k)$          $\Delta\omega$

$$\bar{x}(k) = x(k) \cdot e^{-i\Delta\omega \cdot (k-K_0)}$$
$$\text{mit } k = 1,...K$$

**Fig.5**

$\bar{x}(k)$